# EUROPÄISCHE PATENTANMELDUNG

(11) **EP 3 974 087 A1**
(43) Veröffentlichungstag der Anmeldung: **30.03.2022**
(21) Anmeldenummer: 20197948.1
(22) Anmeldetag: 24.09.2020
(51) Int. Cl.: B23C 5/10, B23C 5/18, B27G 13/00, B27G 13/02, B27G 13/04

(54) **FRÄSWERKZEUG UND VERFAHREN ZUR HERSTELLUNG EINES SOLCHEN FRÄSWERKZEUGES**

(71) Anmelder: Ledermann GmbH & Co. KG, 72160 Horb am Neckar (DE)
(72) Erfinder: Galli, Oliver, 71154 Nufringen (DE)
(74) Vertreter: Zurhorst, Stefan

(57) **Zusammenfassung**

Die Erfindung betrifft ein Fräswerkzeug (1) für Holz oder holzartige Werkstoffe, sowie ein Verfahren zur Herstellung eines solchen Fräswerkzeuges (1). Durch eine Drehachse (2) des Fräswerkzeuges (1) sind eine Längsrichtung (3), eine Radialrichtung (4) und eine Drehrichtung (5) vorgegeben. Das Fräswerkzeug (1) umfasst einen Grundkörper (6) sowie mindestens eine Schneide (7), welche an eine in der Drehrichtung (5) nach vorne weisende Spanfläche (8) und eine in der Radialrichtung (4) nach außen weisende Freifläche (9) angrenzt. Die Schneide (7) und die Spanfläche (8) verlaufen in der Längsrichtung (3) gekrümmt. Die gekrümmte Schneide (7) und die gekrümmte Spanfläche (8) sind an einer separat vom Grundkörper (6) ausgebildeten Schneidplatte (10) ausgebildet. Die Schneidplatte (10) ist mit ihrer ebenen Innenfläche (20) auf einer ebenen Auflagefläche (21) des Grundkörpers (6) befestigt und insbesondere aufgelötet.

## Beschreibung

Die Erfindung betrifft ein Fräswerkzeug mit den Merkmalen nach dem Oberbegriff des Anspruchs 1 sowie ein Verfahren zur Herstellung eines solchen Fräswerkzeuges.

Aus der DE 10 2005 020 513 B3 ist ein gattungsgemäßes Fräswerkzeug in Form eines Schaftfräsers mit zwei konkav gekrümmten Schneiden und mit korrespondierend dazu konkav gekrümmten Spanflächen bekannt. Die beiden Einzelschneiden erstrecken sich durchgehend und unterbrechungsfrei über die gesamte Schnittlänge. Solche Fräswerkzeuge werden insbesondere bei der Bearbeitung von Plattenmaterial aus Holz oder holzartigen Werkstoffen wie Span- oder Faserplatten mit oder ohne Beschichtung eingesetzt. Die konkav gekrümmte Schneide bewirkt, dass an beiden Oberflächen des Plattenmaterials Schnittkräfte entstehen, die ins Innere des Werkstücks gerichtet sind und deshalb ein Ausfransen der Schnittkanten vermeiden.

Das gezeigte Fräswerkzeug ist insgesamt einschließlich Grundkörper, Schaft und Schneiden einstückig ausgeführt. Bei derartigen monolithischen Werkzeugen wird die Materialauswahl durch die Anforderungen an die Schneide bestimmt. Wenn also beispielsweise zur Erzielung einer hohen Standzeit eine Hartmetallschneide gewünscht wird, besteht der Schaftfräser in seiner Gesamtheit einschließlich des Schaftes aus ebendiesem Hartmetall. Dabei können solche Werkzeuge zwar gute Schnittqualitäten und lange Standzeiten erzielen. Allerdings müssen auch verschiedene Nachteile in Kauf genommen werden. Die Formgebung des Schaftes bzw. des Grundkörpers mit Spannuten und dergleichen ist aufwendig. Die konkaven Schneiden können wirtschaftlich nur mit einem sich drehenden Fertigungs-Werkzeug (Fräser, Schleifscheibe) hergestellt werden. Die konkave Form der Spanfläche wird vom kleinstmöglichen Durchmesser des Fertigungs-Werkzeuges bestimmt. Das teure Hartmetall kommt auch abseits der Schneiden an Stellen zum Einsatz, wo dessen Materialeigenschaften gar nicht gebraucht werden oder sogar hinderlich sind. Ein aus Hartmetall gefertigter Schaft ist bruchempfindlich und weist zudem keine erstklassigen Dämpfungseigenschaften auf. Insgesamt ist ein derartiges Werkzeug teuer. Die Verwendung von noch härterem Schneidenmaterial wie PKD (polykristalliner Diamant) ist bei dem vorstehend beschriebenen monolithischen Konzept nach derzeitigem Stand nicht möglich.

Daneben ist es natürlich bekannt, die Möglichkeiten der Materialauswahl durch die Verwendung von separaten Schneidplatten zu erweitern. Schaft und Grundkörper des Fräsers können beispielsweise aus Werkzeugstahl bestehen, wobei dann Hartmetall- oder PKD-Platten aufgelötet werden. Ein solcher Ansatz ist beispielsweise aus der WO 2012/163338 A1 bekannt, wobei ein Werkzeug-Grundkörper für jede Schneidplatte mit einem Plattensitz und mit einem Spanraum versehen ist. Der ebene Plattensitz steht aufrecht, also näherungsweise radial zur Drehachse bzw. quer zur Schnittrichtung. Die zugehörige Schneidplatte ist mit ihrer ebenen Rückseite auf den aufrechten Plattensitz aufgelötet, so dass ihre gegenüberliegende ebene Vorderseite die gleichermaßen ebene Spanfläche bildet.

Bei einer solchen Konstruktion ist keine wirtschaftlich vertretbare Lösung bekannt, eine über die gesamte Schnittlänge reichende Einzelschneide aus einer einzelnen Schneidplatte mit gekrümmten Schneiden- und Spanflächenverlauf darzustellen. Hierfür müsste die in ihrer Grundform ebene Schneidplatte im eingelöteten Zustand auf ihrer anfänglich ebenen Frontseite konkav bearbeitet werden. Da es sich bei dieser Frontseite um eine vollflächige PKD-Schicht handelt, müsste dieses sehr harte und im Übrigen auch sehr teure Material großvolumig abgetragen werden. Dies würde einerseits eine entsprechende Dicke der PKD-Schicht voraussetzen und wäre andererseits wegen des Aufwandes in der Praxis kaum durchzuführen.

Für den eingangs erwähnten Anwendungsfall ist also die oben genannte, in der DE 10 2005 020 513 B3 offenbarte Kombination aus konkav gekrümmter Schneide und konkav gekrümmter Spanfläche in der Bauform nach der WO 2012/163338 A1 durch mehrere Reihen von separaten, ebenen Schneidplatten angenähert. Dazu sind die ebenen Schneidplatten mit ihren ebenen Spanflächen relativ zur Längsrichtung des Werkzeuges in einem Achs- bzw. Neigungswinkel geneigt: Die Spanflächen der nahe am Schaft positionierten Schneidplatten sind zum freien Werkzeugende hin geneigt, während die Spanflächen der nahe am freien Werkzeugende positionierten Schneidplatten zum Schaft hin geneigt sind. Mit anderen Worten sind die endseitigen Schneidplatten einander zugewandt. Bei der Bearbeitung des Werkstückes entsteht insoweit die gleiche Wirkung wie beim kontinuierlich gekrümmten Schneidenverlauf, als dass auch hier an beiden Oberflächen des Plattenmaterials ins Innere des Werkstücks gerichtete Schnittkräfte entstehen.

Solche Konstruktionen weisen jedoch auch Nachteile auf: Für jede der zahlreichen Schneidplatten muss ein Spanraum und ein Plattensitz in den Werkzeuggrundkörper eingefräst werden. Der hohe Materialabtrag hat neben dem hohen Aufwand auch eine Schwächung der Seele des Grundkörpers zur Folge. Hieraus resultiert, dass hochwertige, nur schwer zerspanbare Werkstoffe für den Grundkörper verwendet werden müssen. Auch im Betrieb sind Nachteile zu bemerken: Insbesondere bei Fräswerkzeugen mit kleinen Flugkreisdurchmessern ist die Abfuhr der bei der Zerspanung entstehenden Wärmemenge limitiert. Dies wiederum kann die Leistung des Fräswerkzeuges begrenzen, da andernfalls die Lötverbindung zwischen Schneidplatte und Grundkörper thermisch geschädigt werden kann oder es sogar zu einem sogenannten "Auslöten" kommt.

Der Erfindung liegt die Aufgabe zugrunde, ein gattungsgemäßes Fräswerkzeug derart weiterzubilden, dass mit einfachen Mitteln Schneiden mit gekrümmtem Schneidenverlauf und mit gekrümmter Spanfläche zum Einsatz gebracht werden können, ohne den oben erwähnten Einschränkungen bei monolithischen Werkzeugen oder bei Werkzeugen mit separaten Schneidplatten zu unterliegen.

Diese Aufgabe wird durch ein Fräswerkzeug mit den Merkmalen des Anspruchs 1 gelöst.

Der Erfindung liegt des Weiteren die Aufgabe zugrunde, ein Verfahren zur Herstellung eines solchen Fräswerkzeuges anzugeben.

Diese Aufgabe wird durch ein Verfahren mit den Merkmalen des Anspruchs 13 gelöst.

Die Erfindung basiert auf dem Konzept einer mehrteiligen Bauweise mit einem Grundkörper und daran befestigten Schneidplatten. Die Schneidplatten werden aus einem ebenen Rohling gefertigt und unter Beibehaltung der ebenen Grundform mit einer gekrümmt verlaufenden Schneide und mit einer gekrümmt verlaufenden Spanfläche versehen. Eine eben beibehaltene Oberfläche des Rohlings wird als Innenfläche der Schneidplatte genutzt, welche im montierten Zustand gegenüber der radial äußeren Freifläche liegt und radial nach innen dem Grundkörper zugewandt ist. Korrespondierend dazu ist am Grundkörper eine ebene Auflagefläche als Plattensitz ausgebildet, wobei die Schneidplatte mit ihrer ebenen Innenfläche auf der ebenen Auflagefläche des Grundkörpers befestigt und insbesondere aufgelötet ist.

Die erfindungsgemäße Ausgestaltung eröffnet die Möglichkeit, separate Schneidplatten mit sehr geringem Aufwand auch dann zum Einsatz zu bringen, wenn ein gekrümmter Verlauf von Schneide und Spanfläche gewünscht wird. Die gekrümmte Form wird nicht am fertigen Werkzeug, sondern bereits zuvor bei der Herstellung der einzelnen Schneidplatten erstellt. Da sich die gekrümmte Spanfläche durch den Querschnitt des Rohmaterials bzw. des Verbundmaterial-Rohlings erstreckt, reicht für deren Formgebung eine gesteuerte Schnittführung insbesondere durch Lasern, Erodieren oder dergleichen aus, ohne dass in einem aufwendigen Prozess große Mengen des sehr harten Plattenmaterials abgetragen werden müssten. Da die ebene Fläche des Plattenmaterials im eingebauten Zustand nicht in der Drehrichtung nach vorne auf der Spanfläche, sondern in Radialrichtung innen auf der als Plattensitz fungierenden, radial nach außen weisenden Auflagefläche des Grundkörpers aufliegt, können entsprechend schmale Plattenstreifen zum Einsatz kommen. Dies erlaubt es, aus einem vorhandenen Rohling von bestimmter Geometrie und Größe bei geringem Materialverbrauch eine entsprechend hohe Anzahl von Schneidplatten zu gewinnen. Das teure Plattenmaterial ist kosteneffizient eingesetzt. Da die Formgebung der gekrümmten Spanfläche nicht am fertigen Werkzeug durch Einsatz einer Schleifscheibe oder Erodierscheibe, sondern bereits beim Heraustrennen aus dem Rohling erfolgt, können beliebige Konturverläufe erzielt werden. So ist es möglich, neben Kreisbogenabschnitten auch unregelmäßig oder mehrfach gekrümmte Spanflächen sowie solche in Form eines gekrümmten Polygonzuges zu generieren.

Auch der Werkzeuggrundkörper, welcher bevorzugt aus einem abweichenden Material und insbesondere aus Stahl besteht, ist einfacher als bei einem monolithischen Werkzeug herstellbar. Bei dessen Fertigung müssen keine Rücksichten auf die Schneidengeometrie genommen werden, so dass Spanräume, Plattensitze oder dergleichen nach Belieben ausgeformt werden können. Im Übrigen kann für den Grundkörper ein Material gewählt werden, welches neben leichter Bearbeitbarkeit auch gute Betriebseigenschaften wie Schlagzähigkeit und Dämpfung aufweist. Insbesondere führt die vorrangig radial nach außen statt in Drehrichtung nach vorne gewandte Auflagefläche des Grundkörpers dazu, dass bei der Herstellung vergleichsweise nur wenig Material vom Grundkörper-Rohling abgetragen werden muss. Neben dem verringerten Fertigungsaufwand entsteht vor allem ein im Vergleich zum Stand der Technik größerer Materialquerschnitt des Grundkörpers mit einer höheren mechanischen und thermischen Belastbarkeit, da der verbleibende Materialquerschnitt mit weniger mechanischen Spannungen beaufschlagt ist und außerdem eine höhere Wärmemenge abführen kann.

Die Vorteile der Erfindung kommen besonders bei Bauformen zum Tragen, bei denen das Fräswerkzeug einen Fräsabschnitt mit einer Schneidlänge und einem Durchmesser aufweist, wobei die Schneidlänge größer ist als die Hälfte des Durchmessers und insbesondere größer ist als der Durchmesser, und/oder bei denen die Schneidplatte eine Plattenlänge und eine Dicke aufweist, wobei die Plattenlänge größer als die Dicke ist, und/oder bei denen das Fräswerkzeug einen Fräsabschnitt mit einer Schneidlänge aufweist, wobei sich die mindestens eine Schneide entlang der gesamten Schneidlänge erstreckt, und/oder bei denen die mindestens eine Schneide zwischen zwei Endpunkten verläuft, wobei die Endpunkte auf einer Linie parallel zur Längsrichtung liegen. Hinsichtlich all dieser Merkmale treten im Stand der Technik die eingangs erwähnten Schwierigkeiten auf, welche durch die erfindungsgemäße Ausgestaltung überwunden werden.

Die gemäß der Erfindung zum Einsatz kommenden Schneidplatten können monolithisch beispielsweise aus Hartmetall oder Monodiamant sein. In vorteilhafter Weiterbildung sind sie aus einem Verbundmaterial-Rohling gefertigt, welches eine Trägerschicht insbesondere aus Hartmetall und eine darauf aufgebrachte Hartschicht, insbesondere eine PKD-Schicht, eine PVD-Schicht oder eine CVD-Schicht umfasst. Hieraus wird die ebene Schneidplatte derart ausgeschnitten, dass die Freifläche durch die Hartschicht gebildet wird, dass die der Freifläche gegenüberliegende Innenfläche durch die Trägerschicht gebildet wird, und dass die gekrümmte Spanfläche mittels eines Schnittes durch den Verbundmaterial-Rohling gebildet wird. Die solchermaßen vorbereitete Schneidplatte wird mit ihrer Trägerschicht in der Radialrichtung nach innen weisend derart auf der Auflagefläche des Grundkörpers befestigt, dass die PKD-Schicht in der Radialrichtung außerhalb der Trägerschicht liegt, also radial nach außen weist und dabei die Freifläche bildet. Dabei wird die gekrümmte Spanfläche mittels eines die entsprechende Krümmung abbildenden Schnittes herausgearbeitet. Trotz der Verwendung eines ebenen Rohlings wird also die Krümmung von Schneide und Spanfläche durch einen gekrümmten Schnittverlauf hergestellt, indem nicht die vollflächige Hartschicht, sondern ein Querschnitt durch das Verbundmaterial, also durch die Hartschicht und die darunter liegende Trägerschicht für die Bildung der Spanfläche herangezogen wird.

In einer bevorzugten Ausführungsform verlaufen die Schneide und die Spanfläche gekrümmt, während die in Drehrichtung gegenüberliegende Anlagefläche eben ausgebildet ist. Die zugeordnete Stützfläche am Plattensitz des Grundkörpers ist in einem solchen Fall dazu korrespondierend in gleicher Weise eben auszuführen, was den Herstellprozess erleichtert.

In einer vorteilhaften Alternative ist die Anlagefläche in der gleichen Richtung gekrümmt wie die Spanfläche. Insbesondere weist dabei die Schneidplatte zwischen der Spanfläche und der Anlagefläche eine konstante Breite auf. Dadurch hat eine einzelne Schneidplatte auch in ihren Endbereichen eine sehr schmale Bauform mit geringem Materialverbrauch. Mehrere solcher Schneidplatten können bei der Herstellung mit geringem Platzbedarf ineinander geschachtelt aus einem Rohling ausgetrennt werden, so dass eine entsprechend hohe Ausbeute erzielt wird.

Ausführungsbeispiele in der Erfindung sind nachfolgend anhand der Zeichnung näher beschrieben. Es zeigen:
- Fig. 1: in einer perspektivischen Ansicht ein erfindungsgemäß ausgeführtes Fräswerkzeug am Beispiel eines Schaftfräsers mit zwei PKD-Schneidplatten, deren PKD-Schicht radial nach außen weist und deren Schneiden zur Spanfläche einen gekrümmten Verlauf aufweisen,
- Fig. 2: in einer perspektivischen Ansicht eine einzelne Schneidplatte des Fräswerkzeuges nach Fig. 1 mit Details zu dessen Ausgestaltung einschließlich einer ebenen Anlagefläche,
- Fig. 3: eine Variante des Fräswerkzeuges nach Fig. 1 mit Schneidplatten, welche eine konstante Breite aufweisen,
- Fig. 4: eine einzelne Schneide des Fräswerkzeuges nach Fig. 3 mit weiteren Einzelheiten ihrer Ausgestaltung einschließlich einer gekrümmten rückwärtigen Anlagefläche,
- Fig. 5: eine Variante der Schneide nach Fig. 4 mit mehrfacher Krümmung,
- Fig. 6: eine weitere Variante der Schneide nach Fig. 4 mit polygonförmig gekrümmtem Verlauf,
- Fig. 7: in einer perspektivischen Ansicht einen PKD-Verbundmaterial-Rohling mit einzelnen, daraus herauszutrennenden Schneidplatten,
- Fig. 8: eine weitere Variante des Fräswerkzeuges nach den Fig. 1, 3 mit wellenförmig konturierter PKD-Schicht zur Bildung einer Schruppschneide und
- Fig. 9: eine weitere Variante des Fräswerkzeuges mit einer Konturierung der PKD-Schicht zur Bildung einer unterbrochenen Schneide.

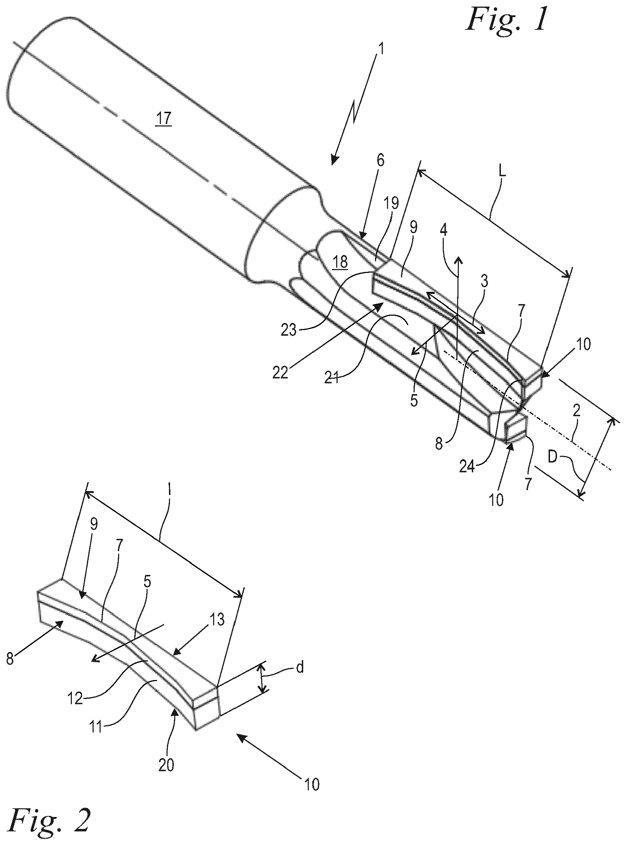

Fig. 1 zeigt in einer perspektivischen Ansicht ein erfindungsgemäßes Fräswerkzeug 1 am Beispiel eines Schaftfräsers. Es können aber auch andere Fräswerkzeuge beispielsweise in Form eines Scheibenfräsers oder dergleichen im Rahmen der Erfindung vorgesehen sein. Jedenfalls ist das erfindungsgemäße Fräswerkzeug 1 für die zerspanende Bearbeitung insbesondere von Holz oder holzartigen Werkstoffen, d.h. von Span- oder Faserplatten mit oder ohne Beschichtung ausgelegt. Das Fräswerkzeug 1 weist eine Längsmittelachse auf, welche im Betrieb eine Drehachse 2 darstellt und wobei das Fräswerkzeug 1 um diese Drehachse 2 drehend angetrieben wird.

Das Fräswerkzeug umfasst einen Grundkörper 6, welcher hier aus einem Werkzeugabschnitt 18 und einem einteilig daran angeformten Schaft 17 gebildet ist. Es kann aber auch eine mehrteilige Bauform zweckmäßig sein. Jedenfalls ist umfangseitig des Grundkörpers 6 mindestens eine Schneide 7 angeordnet, wobei das Fräswerkzeug 1 im gezeigten Ausführungsbeispiel zwei hinsichtlich der Drehachse 2 diametral sich gegenüberliegende Schneiden 7 aufweist.

Parallel zur Drehachse 2 verläuft eine Längsrichtung 3. Senkrecht dazu liegt eine Radialrichtung 4, die von der Drehachse 2 ausgeht und durch die Schneide 7 verläuft. Senkrecht zur Längsrichtung 3 und ebenfalls senkrecht zur Radialrichtung 4 liegt noch eine Drehrichtung 5, die sich aus der Drehbewegung des Fräswerkzeuges 1 um die Drehachse 2 ergibt.

Innerhalb des Werkzeugabschnittes 18 weist das Fräswerkzeug 1 einen für die Zerspanung wirksamen Fräsabschnitt 22 mit einer Schneidlänge L auf, welcher durch die Summe aller Schneiden 7 abgedeckt ist. Außerdem weist das Fräswerkzeug 1 in seinem Fräsabschnitt 22 einen wirksamen Durchmesser D auf, der auch als Flugkreisdurchmesser der Schneiden 7 bezeichnet wird. Im Rahmen der Erfindung kann eine konische oder andere Bauform mit entlang des Fräsabschnittes 22 variierendem Durchmesser D vorgesehen sein. Vorliegend ist der Durchmesser im Fräsabschnitt 22 konstant, womit es sich also um eine zylindrische Bauform handelt. In seiner beispielhaften Ausführung als Schaftfräser ist der Fräsabschnitt 22 schlank, wobei die Schneidlänge L vorteilhaft größer ist als die Hälfte des Durchmessers D. Im gezeigten bevorzugten Ausführungsbeispiel ist die Schneidlänge größer als der Durchmesser D. Die einzelnen Schneiden 7 verlaufen jeweils zwischen zwei Endpunkten 23, 24, wobei die zusammengehörenden Endpunkte 23, 24 auf einer gemeinsamen Linie parallel zur Längsrichtung 3 liegen. Im gezeigten bevorzugten Ausführungsbeispiel erstrecken sich beide Schneiden 7 außerdem entlang der gesamten Schneidlänge L. Es kann aber auch eine gestückelte Ausgestaltung zweckmäßig sein, bei der mehrere kürzere Schneiden aneinander gereiht die Schneidlänge L abdecken.

In der Schneide 7 treffen eine in der Drehrichtung 5 nach vorne weisende Spanfläche 8 sowie eine in der Radialrichtung 4 nach außen weisende Freifläche 9 aufeinander. Die Freifläche 9 ist eben ausgebildet, kann aber auch in Anpassung an den Flugkreis bzw. zur Bildung einer Konturierung (siehe unten) überschliffen oder in anderer Form überarbeitet sein. Die Schneide 7 und die daran angrenzende Spanfläche 8 verlaufen beide in der Längsrichtung 3 gekrümmt. Bevorzugt handelt es sich um eine konkave Krümmung. Es kann aber auch eine zumindest abschnittsweise konvexe Krümmung zweckmäßig sein. Als "Krümmung" ist hier ganz allgemein ein nicht gerader bzw. nicht ebener Verlauf gemeint, der neben stetigen Krümmungen auch Knicke und Polygonzüge umfassen kann. Die Krümmung verläuft hier derart, dass die Schneide 7 und die Spanfläche 8 in ihrem Mittenbereich parallel zur Längsrichtung 3 liegen, während in deren Endbereichen die zugehörigen Teilflächen der Spanfläche 8 aufeinander zuweisen. Hierdurch wird beim Zerspanen insbesondere von beschichteten Span- oder Faserplatten erreicht, dass die aufeinander zuweisenden Schneidenbereiche auf die äußeren Randschichten des Plattenmaterials treffen. Dort entstehen nach innen in das Plattenmaterial hinein gerichtete Schnittkraftkomponenten, die ein Ausbrechen der Beschichtung bzw. der Deckschicht vermeiden.

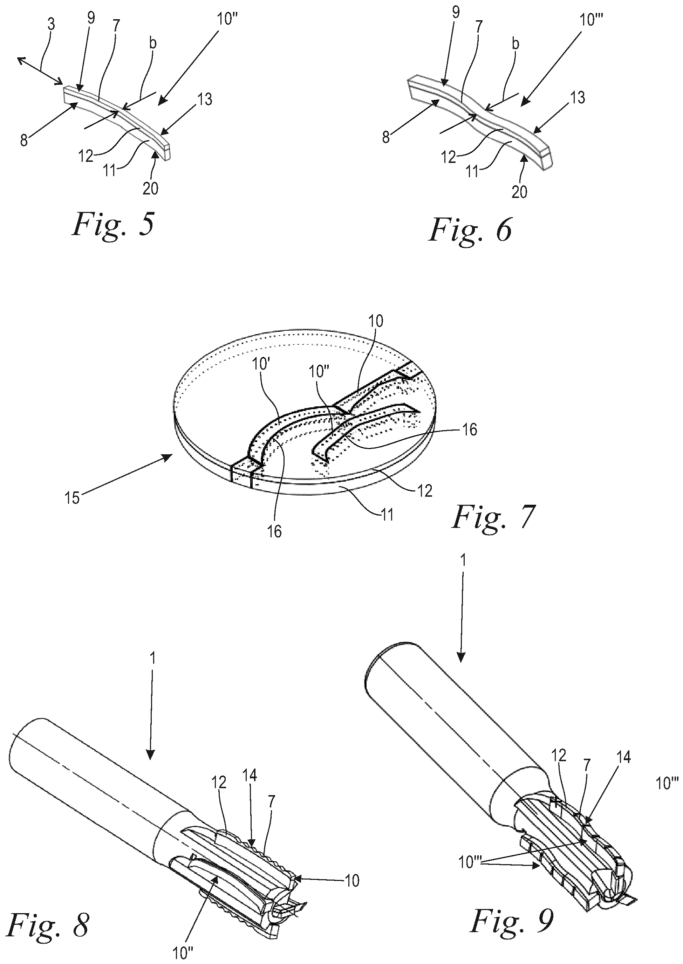

Die Schneiden 7 des Fräswerkzeuges 1 sind jeweils an einer ebenen Schneidplatte 10 aus einem Verbundmaterial ausgebildet, während der Grundkörper 6 aus einem davon abweichenden Material, hier Stahl bzw. Werkzeugstahl gefertigt ist. Zwei identische Schneidplatten 10 sind hier am Grundkörper 6 befestigt. Eine einzelne Schneidplatte 10 dieser Art ist perspektivisch in Fig. 2 dargestellt. Dort ist erkennbar, dass das ihr zugrunde liegende Verbundmaterial eine Trägerschicht 11 sowie eine Hartschicht 12 umfasst. Die Trägerschicht 11 besteht wie üblich aus Hartmetall, worauf in an sich bekannter Weise die Hartschicht 12 beispielsweise im PVD- oder CVD-Verfahren (Physical Vapor Deposition oder Chemical Vapor Deposition) aufgebracht ist. Hierfür kommen verschiedene hochharte Werkstoffe in Betracht. Vorliegend ist die Hartschicht 12 eine PKD-Schicht (Polykristalliner Diamant). Die Ebene der Hartschicht 12 bzw. deren freie Oberfläche gibt die Freifläche 9 vor, während die Spanfläche 8 durch einen Schnitt durch das Verbundmaterial hindurch gebildet ist. Der gekrümmte Verlauf von Schneide 7 und Spanfläche 8 ist im gezeigten Ausführungsbeispiel durch einen Polygonzug angenähert. Es kann aber auch eine stetige Krümmung, beispielsweise wie im Ausführungsbeispiel nach Fig. 6, vorgesehen sein.

Die Schneidplatte 10 weist eine Plattenlänge 1 und eine Dicke d auf. Aus der Zusammenschau mit Fig. 1 ergibt sich unmittelbar, dass die Plattenlänge 1 gleich der Schneidlänge L ist. Abweichend vom Ausführungsbeispiel können aber auch kürzere Plattenlängen 1 zweckmäßig sein. Jedenfalls ist unschwer zu erkennen, dass die Plattenlänge 1 größer und insbesondere um ein Mehrfaches größer ist als die Dicke d. Aus der weiteren Zusammenschau mit Fig. 1 ergibt sich noch, dass die Richtung der Dicke d im montierten Zustand im Wesentlichen mit der Radialrichtung 4 zusammenfällt.

Bezogen auf die Drehrichtung 5 liegt der Spanfläche 8 eine rückwärtige Anlagefläche 13 gegenüber, welche im gezeigten Ausführungsbeispiel als ebene Fläche ausgestaltet ist. Eine Folge davon ist, dass die Schneidplatte 10 in ihrem Mittelbereich die geringste Breite aufweist und dass diese Breite zu den Enden hin größer wird.

Der Freifläche 9 gegenüberliegend weist die Schneidplatte 10 eine ebene Innenfläche 20 auf. Aus der Zusammenschau der Fig. 1 und 2 ergibt sich, dass die gemäß Fig. 2 vorbereitete Schneidplatte 2 auf dem Grundkörper 6 montiert bzw. mit diesem verlötet wird, wobei der Grundkörper 6 korrespondierend zur Innenfläche 20 der Schneidplatte 10 eine Auflagefläche 21 aufweist. Im eingebauten Zustand nach Fig. 2 ist die Innenfläche 20 der Schneidplatte 10 radial nach innen dem Grundkörper 6 zugewandt, während die damit korrespondierende, am Grundkörper 6 ausgebildete ebene Auflagefläche 21 ihrerseits radial nach außen weist und der Innenfläche 20 der Schneidplatte 10 zugewandt ist. Die Innenfläche 20 liegt auf der als Plattensitz wirkenden Auflagefläche 21 auf, wobei zwischen beiden eine Lötverbindung besteht. Außerdem weist der Grundkörper 6 noch als Teil des Plattensitzes eine zur Anlagefläche 13 der Schneidplatte 10 korrespondierende, ebenfalls ebene Stützfläche 19 auf, an welcher die Schneidplatte 10 mit ihrer rückwärtigen Anlagefläche 13 flächig anliegt. Die Schneidplatte 10 ist dabei derart ausgerichtet, dass ihre Trägerschicht 11 in der Radialrichtung 4 nach innen weisend an der Anlagefläche des Grundkörpers 6 anliegt, während die Hartschicht 12 radial nach außen weist, also in der Radialrichtung 4 außerhalb der Trägerschicht 11 liegt und die Freifläche 9 bildet.

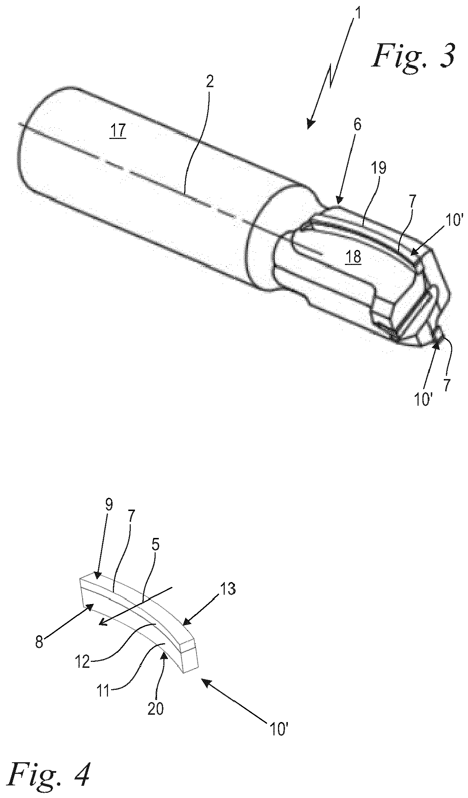

Fig. 3 zeigt in der perspektivischen Ansicht eine Variante des Fräswerkzeuges 1 nach Fig. 1 mit zwei Schneidplatten 10', deren Schneiden 7 stetig konkav gekrümmt sind. Fig. 4 zeigt in einer perspektivischen Einzelteilansicht eine einzelne dieser Schneidplatten 10', wobei auch die in der Drehrichtung 5 rückwärtige Anlagefläche 13 gekrümmt ist. Dabei ist die Krümmung so gewählt, dass die Schneidplatte 10 zwischen der Spanfläche 8 und der Anlagefläche 13 entlang ihrer Längserstreckung eine konstante Breite b aufweist. Korrespondierend zur Krümmung der rückwärtigen Anlagefläche 13 ist auch die im Grundkörper 6 ausgebildete Stützfläche 19 gekrümmt ausgeführt, so dass die Schneidplatte 10' mit ihrer rückwärtigen Anlagefläche 13 flächig daran anliegt und dort eine flächige Lötverbindung erfährt. Sofern nicht anders beschrieben, stimmt das Ausführungsbeispiel nach den Fig. 3, 4 in den übrigen Merkmalen und Bezugszeichen mit dem Ausführungsbeispiel nach den Fig. 1, 2 überein.

Fig. 5 zeigt in einer perspektivischen Ansicht ein weiteres Ausführungsbeispiel einer Schneidplatte, nämlich eine Schneidplatte 10" mit gemeinsamen Merkmalen der Ausführungen nach den Fig. 2 und 4: In Übereinstimmung mit Fig. 2 weist die Schneidplatte 10" nach Fig. 5 eine gekrümmte Schneide 7 sowie eine gekrümmte Spanfläche 8 auf, deren Krümmung in der Längsrichtung 3 einem Polygonzug folgt. Abweichend von Fig. 2 gilt hier das Gleiche aber auch für die rückwärtige Anlagefläche 13, so dass die Schneidplatte 10" in Übereinstimmung mit Fig. 4 entlang der Längsrichtung 3 eine konstante Breite b aufweist. Auch die Schneidplatte 10'" gemäß dem Ausführungsbeispiel nach Fig. 6 ist mit einer konstanten Breite b versehen, wobei hier jedoch der Krümmungsverlauf nicht einfach konkav, sondern doppelt konkav mit einem dazwischen liegenden konvexen Mittelabschnitt ist. In den übrigen Merkmalen und Bezugszeichen stimmen die Ausführungsbeispiele der 2, 4, 5 und 6 miteinander überein.

Fig. 7 zeigt in einer perspektivischen Ansicht einen Verbundmaterial-Rohling 15 in Form einer Ronde. Der Verbundmaterial-Rohling 15 ist insgesamt eben und weist eine untere Trägerschicht 11 aus Hartmetall sowie eine fest darauf aufgebrachte obere PKD-Hartschicht 12 auf. Alle in Betracht kommenden Bauformen einer Schneidplatte 10 einschließlich der zuvor beschriebenen Schneidplatten 10, 10', 10", 10'" werden nach dem erfindungsgemäßen Verfahren hergestellt, demnach sie mittels eines den Verbundmaterial-Rohling quer zu seiner Ebene durchtrennenden Schnittes 16 ausgetrennt und vereinzelt werden. Beispielhaft ist hier der Verlauf eines Schnittes 16 zur Bildung von drei verschiedenen Schneidplatten 10, 10', 10" dargestellt. In der Praxis wird jedoch die Führung des Schnittes 16 derart verschachtelt gewählt, dass möglichst viele gleiche Schneidplatten 10 aus einer Ronde bzw. aus einem Verbundmaterial-Rohling 15 ausgetrennt und gewonnen werden können.

Aus der Zusammenschau der Fig. 7 mit den übrigen Figuren ergibt sich, dass die spätere Freifläche 9 einer einzelnen Schneidplatte 10 durch die freie Oberfläche der Hartschicht 12 des PKD-Verbundmaterials gebildet wird, während die Innenfläche 20 der jeweiligen Schneidplatte 10 durch die freie, ebene Oberfläche der Trägerschicht 11 gebildet wird. Letztere braucht keinerlei geometrische Nachbearbeitung und kann unmittelbar als Lötfläche für die Befestigung an der Auflagefläche 21 zum Einsatz kommen. Die durch den Schnitt 16 gebildete Schnittfläche bildet ihrerseits neben der hinteren Anlagefläche 13 vor allem auch die vordere gekrümmte Spanfläche 8 und die gleichermaßen gekrümmte Schneide 7. Die solchermaßen vorbereitete Schneidplatte 10 wird dann am Grundkörper 6 des Fräswerkzeuges 1 beispielsweise durch Hartlöten befestigt. Ein nachträgliches Ausarbeiten des gekrümmten Verlaufs von Schneide 7 und Spanfläche 8 im montierten bzw. verlöteten Zustand ist nicht mehr erforderlich. Nacharbeiten beschränken sich auf das Schärfen der Schneide und eine eventuelle Korrektur der Freifläche 9, wie nachstehend gezeigt:
Die Fig. 8 und 9 zeigen noch weitere Varianten eines erfindungsgemäß ausgeführten Fräswerkzeuges. Im Ausführungsbeispiel nach Fig. 8 sind zusätzlich zu den beiden Schneiden 10" nach Fig. 6 noch zwei weitere Schneiden 10 montiert, deren Hartschicht 12 außenseitig, also im Bereich der Schneide 7 und der Freifläche 9 mit einer wellenförmigen Konturierung 14 versehen ist. Anstelle einer Wellenform kann auch eine Zackenform zweckmäßig sein. Jedenfalls wird hierdurch die zugeordnete Schneide 7 als Schruppschneide ausgebildet, wodurch die auftretenden Schnittkräfte reduziert werden. Im Ausführungsbeispiel nach Fig. 9 sind insgesamt drei gleichmäßig über den Umfang verteilte Schneiden 10'" nach Fig. 6 montiert, wobei auch deren PKD-Schicht 12 im Bereich der Schneide 7 und der Freifläche 9 mit einer Konturierung 14 versehen ist. Hier besteht die Konturierung 14 in regelmäßigen Unterbrechungen der ansonsten eben beibehaltenen Hartschicht 12 sowie der Schneide 7, wodurch Schnittkraft und Spanbildung günstig beeinflusst werden können. Im Übrigen gilt auch für die Ausführungsbeispiele nach den Fig. 8 und 9, dass sie in allen weiteren Merkmalen und Bezugszeichen mit den zuvor beschriebenen Ausführungsformen übereinstimmen.

## Patentansprüche

1. Fräswerkzeug (1) für die zerspanende Bearbeitung von Holz oder holzartigen Werkstoffen, vorgesehen zum drehenden Antrieb um eine Drehachse (2), wobei durch die Drehachse (2) eine Längsrichtung (3), eine Radialrichtung (4) und eine Drehrichtung (5) vorgegeben sind, umfassend einen Grundkörper (6) sowie mindestens eine umfangsseitig des Grundkörpers (6) angeordnete Schneide (7), wobei die Schneide (7) an eine in der Drehrichtung (5) nach vorne weisende Spanfläche (8) und eine in der Radialrichtung (4) nach außen weisende Freifläche (9) angrenzt, und wobei die Schneide (7) und die Spanfläche (8) in der Längsrichtung (3) gekrümmt verlaufen,
**dadurch gekennzeichnet, dass** die gekrümmte Schneide (7) und die gekrümmte Spanfläche (8) an einer separat vom Grundkörper (6) ausgebildeten Schneidplatte (10) ausgebildet sind, wobei die Schneidplatte (10) der Freifläche (9) gegenüberliegend eine radial nach innen dem Grundkörper (6) zugewandte ebene Innenfläche (20) aufweist, wobei am Grundkörper (6) eine mit der ebenen Innenfläche (20) korrespondierende ebene Auflagefläche (21) ausgebildet ist, und wobei die Schneidplatte (10) mit ihrer ebenen Innenfläche (20) auf der ebenen Auflagefläche (21) des Grundkörpers (6) befestigt und insbesondere aufgelötet ist.

2. Fräswerkzeug nach Anspruch 1,
**dadurch gekennzeichnet, dass** das Fräswerkzeug einen Fräsabschnitt (22) mit einer Schneidlänge (L) und einem Durchmesser (D) aufweist, wobei die Schneidlänge (L) größer ist als die Hälfte des Durchmessers (D) und insbesondere größer ist als der Durchmesser (D).

3. Fräswerkzeug nach Anspruch 1 oder 2,
**dadurch gekennzeichnet, dass** die Schneidplatte (10) eine Plattenlänge (1) und eine Dicke (d) aufweist, und dass die Plattenlänge (1) größer als die Dicke (d) ist.

4. Fräswerkzeug nach einem der Ansprüche 1 bis 3,
**dadurch gekennzeichnet, dass** das Fräswerkzeug einen Fräsabschnitt (22) mit einer Schneidlänge (L) aufweist, wobei sich die mindestens eine Schneide (7) entlang der gesamten Schneidlänge (L) erstreckt.

5. Fräswerkzeug nach einem der Ansprüche 1 bis 4,
**dadurch gekennzeichnet, dass** die mindestens eine Schneide (7) zwischen zwei Endpunkten (23, 24) verläuft, wobei die Endpunkte (23, 24) auf einer Linie parallel zur Längsrichtung (3) liegen.

6. Fräswerkzeug nach einem der Ansprüche 1 bis 5,
**dadurch gekennzeichnet, dass** die Schneidplatte (10) aus einem Verbundmaterial mit einer Trägerschicht (11) und mit einer Hartschicht (12) gebildet ist, wobei die Schneidplatte (10) mit ihrer Trägerschicht (11) in der Radialrichtung (4) nach innen weisend am Grundkörper (6) befestigt ist, und wobei die Hartschicht (12) in der Radialrichtung (4) außerhalb der Trägerschicht (11) liegt und die Freifläche (9) bildet.

7. Fräswerkzeug nach Anspruch 6,
**dadurch gekennzeichnet, dass** die Hartschicht (12) eine PKD-Schicht, eine PVD-Schicht oder eine CVD-Schicht ist.

8. Fräswerkzeug nach Anspruch 6 oder 7,
**dadurch gekennzeichnet, dass** die Schneidplatte (10) aus einem ebenen Verbundmaterial-Rohling (15) mit einer Trägerschicht (11) und mit einer Hartschicht (12) derart ausgeschnitten ist, dass die Freifläche (9) durch die Hartschicht (12) gebildet ist, dass die der Freifläche (9) gegenüberliegende Innenfläche (20) durch die Trägerschicht gebildet ist, und dass die Spanfläche (8) mittels eines Schnittes (16) durch den Platten-Rohling (15) gebildet ist.

9. Fräswerkzeug nach einem der Ansprüche 1 bis 8,
**dadurch gekennzeichnet, dass** die Schneide (7) und die Spanfläche (8) gekrümmt verlaufen, dass die Schneidplatte (10) bezogen auf die Drehrichtung (5) der Spanfläche (8) gegenüberliegend eine Anlagefläche (13) aufweist, und dass die Anlagefläche (13) eben ist.

10. Fräswerkzeug nach einem der Ansprüche 1 bis 8,
**dadurch gekennzeichnet, dass** die Schneide (7) und die Spanfläche (8) gekrümmt verlaufen, dass die Schneidplatte (10) bezogen auf die Drehrichtung (5) der Spanfläche (8) gegenüberliegend eine Anlagefläche (13) aufweist, und dass die Schneidplatte (10) zwischen der Spanfläche (8) und der Anlagefläche (13) eine konstante Breite (b) aufweist.

11. Fräswerkzeug nach einem der Ansprüche 1 bis 10,
**dadurch gekennzeichnet, dass** in die Freifläche (9) eine Konturierung (14) eingearbeitet ist.

12. Fräswerkzeug nach einem der Ansprüche 1 bis 114,
**dadurch gekennzeichnet, dass** der Grundkörper (6) aus einem von der Schneidplatte (10) abweichenden Material und insbesondere aus Stahl gebildet ist.

13. Verfahren zur Herstellung eines Fräswerkzeuges nach einem der Ansprüche 1 bis 12, **gekennzeichnet durch** folgende Verfahrensschritte:
- aus einem ebenen Rohling wird eine ebene Schneidplatte (10) mit einer gekrümmt verlaufenden Schneide (7), mit einer gekrümmt verlaufenden Spanfläche (8) und mit einer ebenen Innenfläche (20) ausgetrennt,
- die Schneidplatte (10) wird mit ihrer ebenen Innenfläche (20) in der Radialrichtung (4) nach innen weisend an einer ebenen Auflagefläche (21) des Grundkörpers (6) befestigt und insbesondere damit verlötet.

14. Verfahren nach Anspruch 13,
**dadurch gekennzeichnet, dass** die Schneidplatte (10) aus einem ebenen Verbundmaterial-Rohling (15) mit einer Trägerschicht (11) und mit einer Hartschicht (12) derart ausgeschnitten wird, dass die Freifläche (9) durch die Hartschicht (12) gebildet wird, dass die der Freifläche (9) gegenüberliegende Innenfläche (20) durch die Trägerschicht (11) gebildet wird, und dass die gekrümmte Spanfläche (8) mittels eines Schnittes (16) durch den Verbundmaterial-Rohling (15) gebildet wird, wobei die solchermaßen vorbereitete Schneidplatte (10) am Grundkörper (6) des Bearbeitungswerkzeuges (1) befestigt wird.
